Europäisches Patentamt

European Patent Office

Office européen des brevets

(11) Veröffentlichungsnummer: **0 287 958 B1**

(12) **EUROPÄISCHE PATENTSCHRIFT**

(45) Veröffentlichungstag der Patentschrift: **01.07.92**

(21) Anmeldenummer: **88105976.0**

(22) Anmeldetag: **14.04.88**

(51) Int. Cl.⁵: **B23D 63/00**

(54) **Vorrichtung zum Klemmen eines Sägeblattes an einer Sägenbearbeitungsmaschine.**

(30) Priorität: **21.04.87 DE 3713407**

(43) Veröffentlichungstag der Anmeldung:
**26.10.88 Patentblatt 88/43**

(45) Bekanntmachung des Hinweises auf die
Patenterteilung:
**01.07.92 Patentblatt 92/27**

(84) Benannte Vertragsstaaten:
**CH DE FR GB IT LI**

(56) Entgegenhaltungen:
**DE-A- 2 829 310**
**DE-B- 1 022 080**
**US-A- 3 822 613**

**PROSPEKT "CANA S/CANA SL", August 1984**
**VOLLMER WERKE MASCHINENFABRIK**
**GMBH, Spezialautomat zum Schärfen von**
**Trenn- und Blockbandsägen 6 Seiten**

(73) Patentinhaber: **VOLLMER WERKE MASCHINEN-**
**FABRIK GMBH**
**Ehingerstrasse 34**
**W-7950 Biberach/Riss 1(DE)**

(72) Erfinder: **Beck, Ernst**
**Wennedacher Strasse 16**
**W-7951 Maselheim(DE)**
Erfinder: **Riehlein, Fritz**
**Bürgerturmstrasse 13**
**W-7950 Biberach/Riss 1(DE)**
Erfinder: **Lenard, Peter**
**Mittelbergerstrasse 58**
**W-7950 Biberach/Riss 1(DE)**

(74) Vertreter: **Goetz, Rupert, Dipl.-Ing. et al**
**Wuesthoff & Wuesthoff Patent- und Rechts-**
**anwälte Schweigerstrasse 2**
**W-8000 München 90(DE)**

# Beschreibung

Die Erfindung betrifft eine Vorrichtung zum Klemmen eines Sägeblattes an einer Sägenbearbeitungsmaschine, mit
- einer Klappe, die an einem Maschinengestell zwischen einer Offenstellung und einer Schließstellung hin- und herbewegbar gelagert ist,
- einer ersten Klemmbacke, die am Maschinengestell abgestützt ist,
- einer zweiten Klemmbacke, die an der Klappe abgestützt ist, um in deren Schließstellung ein Sägeblatt zwischen sich und der ersten Klemmbacke zu klemmen,
- einem Riegel, der zwischen einer Ausraststellung und einer Einraststellung hin- und herbewegbar ist und in seiner Ausraststellung das Öffnen der Klappe ermöglicht, in seiner Einraststellung hingegen die Klappe in deren Schließstellung festhält, und
- einer Handhabe zum Bewegen des Riegels.

Bekannte Vorrichtungen dieser Gattung (siehe z.B. den Prospekt der Anmelderin "CanaS/CanaSL" vom August 1984) sind an Spezialautomaten zum Schärfen von Trenn- und Blockbandsägen angebaut und haben eine Klappe, die um eine erste waagerechte Achse schwenkbar ist. Diese erste Achse erstreckt sich parallel zur Längsrichtung der Bandsäge, die in der Vorrichtung geklemmt werden soll. Der zugehörige Riegel ist um eine zweite waagerechte Achse, die sich im rechten Winkel zur ersten Achse erstreckt, schwenkbar am Maschinengestell gelagert und läßt sich in der Schließstellung der Klappe derart nach oben schwenken, daß er mit seinem freien Ende auf eine kurvenförmige Rippe aufläuft, die an der Klappe ausgebildet ist. Zum Schwenken des Riegels ist an dessen freiem Ende eine Handhabe in Form eines Kugelknopfes befestigt Der Riegel ist von einem Blattfederpaket gebildet, so daß er die Klappe mit einer bestimmten Kraft in deren Schließstellung hält.

Solche bekannten Vorrichtung erfordern für ihre Betätigung zwei Hände. Wenn ein Sägeblatt eingelegt und die Klappe nach oben in ihre Schließstellung geschwenkt worden ist, muß sie mit einer Hand festgehalten werden, während der Riegel nach oben geschwenkt und durch Auflaufen seines freien Endes auf die Rippe der Klappe unter Biegespannung gesetzt wird. Umgekehrt muß zum Freigeben des Sägeblattes die Klappe mit einer Hand festgehalten werden, während der Riegel mit der anderen Hand nach unten geschwenkt wird, ehe die Klappe dann mit der ersten Hand oder mit beiden Händen nach unten geschwenkt wird. Werden die Bewegungen der beiden Hände nicht richtig miteinander koordiniert, so besteht Verletzungsgefahr. Beispielsweise kann die Klappe mit großer Wucht nach unten schwenken und den Benutzer treffen, wenn dieser sich bückt, um mit einer Hand die am freien Ende des Riegels befestigte Handhabe zu erreichen und dabei versäumt, mit der anderen Hand die Klappe richtig festzuhalten.

Der Erfindung liegt die Aufgabe zugrunde, eine Vorrichtung zum Festklemmen eines Sägeblattes an einer Sägenbearbeitungsmaschine, insbesondere einer Maschine zum Schärfen von Trenn- und Blockbandsägen, derart weiterzubilden, daß sie ohne Gefahr für den Benutzer wahlweise mit einer Hand oder durch einfache und gleiche Bewegungen beider Hände betätigbar ist.

Die Aufgabe ist erfindungsgemäß bei einer Vorrichtung der eingangs beschriebenen Gattung dadurch gelöst, daß
- der Riegel an der Klappe gelagert und hinter einem am Maschinengestell angeordneten Stützkörper einrastbar ist, und
- die Handhabe, ebenfalls an der Klappe, zwischen einer Ruhestellung und einer Betätigungsstellung hin- und herbewegbar gelagert ist und in ihrer Ruhestellung das Einrasten des Riegels zuläßt, bei einer Bewegung der Handhabe in ihre Betätigungsstellung hingegen den Riegel ausrasten läßt.

Da erfindungsgemäß sowohl der Riegel wie die Handhabe an der Klappe gelagert sind, braucht der Benutzer nur noch die Handhabe zu erfassen, um nacheinander die Klappe und den Riegel zu betätigen. Dies kann im allgemeinen mit einer Hand geschehen, so daß der Benutzer die andere Hand frei hat, um beispielsweise eine Vorschubbewegung auszulösen und dabei festzustellen, ob die Klemmung des Sägeblattes weder zu lose noch zu fest ist.

Zweckmäßigerweise ist am Stützkörper eine Rampe ausgebildet, die beim Schließen der Klappe mit in Ruhestellung befindlicher Handhabe den Riegel in die Ausraststellung drängt und ihn erst hinter dem Stützkörper einrasten läßt. Dadurch wird die Handhabung weiter erleichtert, denn der Benutzer kann beim Schließen der Klappe die Handhabe zunächst wahlweise in Ruhe- oder in Betätigungsstellung halten; er braucht die Handhabe erst bei geschlossener Klappe in die Ruhestellung zu bringen, in der sie das Einrasten des Riegels hinter dem Stützkörper zuläßt.

Es ist ferner zweckmäßig, wenn Riegel und Handhabe mit einem gemeinsamen Lagerbolzen an der Klappe schwenkbar gelagert sind. Dadurch ergibt sich ein besonders einfacher Übertragungsweg der auf die Handhabe aufgebrachten Kräfte zum Schwenken der Klappe einerseits und zum Betätigen des Riegels andererseits.

Die Handhabung wird weiter vereinfacht, wenn sich der Lagerbolzen parallel zu einer Achse erstreckt, um welche die Klappe in bezug auf das Maschinengestell schwenkbar ist.

Bei einer bevorzugten Weiterbildung der im vorstehenden beschriebenen Ausführungsformen ist der Riegel auf dem Lagerbolzen gegensinnig zur Handhabe schwenkbar, und an der Klappe ist zusätzlich eine Wippe gelagert derart, daß durch Schwenken der Handhabe aus ihrer Ruhe- in ihre Betätigungsstellung die Wippe aus einer unwirksamen Stellung in eine Stützstellung schwenkbar ist und dadurch den Riegel ausrasten läßt.

Die Handhabe ist zweckmäßigerweise am Lagerbolzen befestigt und dieser hat einen Exzenter, auf dem der Riegel gelagert ist. Dadurch wird es möglich, durch Schwenken der Handhabe den Riegel nicht nur zwischen seiner Einraststellung und seiner Ausraststellung hin- und herzuschwenken, sondern zusätzlich den Riegel in seiner Einraststellung zu spannen.

Ein sicheres Einrasten des Riegels in der dazu vorgesehenen Stellung der Klappe und der Handhabe kann durch das Eigengewicht des Riegels gewährleistet sein. Vorzugsweise ist der Riegel jedoch durch eine Feder im Sinne einer Bewegung in seine Einraststellung belastet.

Schließlich ist es vorteilhaft, wenn die Klappe durch eine Feder im Sinne einer Bewegung in ihre Schließstellung vorgespannt und dadurch von mindestens einem Teil ihres Gewichts entlastet ist.

Ein Ausführungsbeispiel der Erfindung wird im folgenden anhand schematischer Zeichnungen mit weiteren Einzelheiten erläutert. Es zeigt:

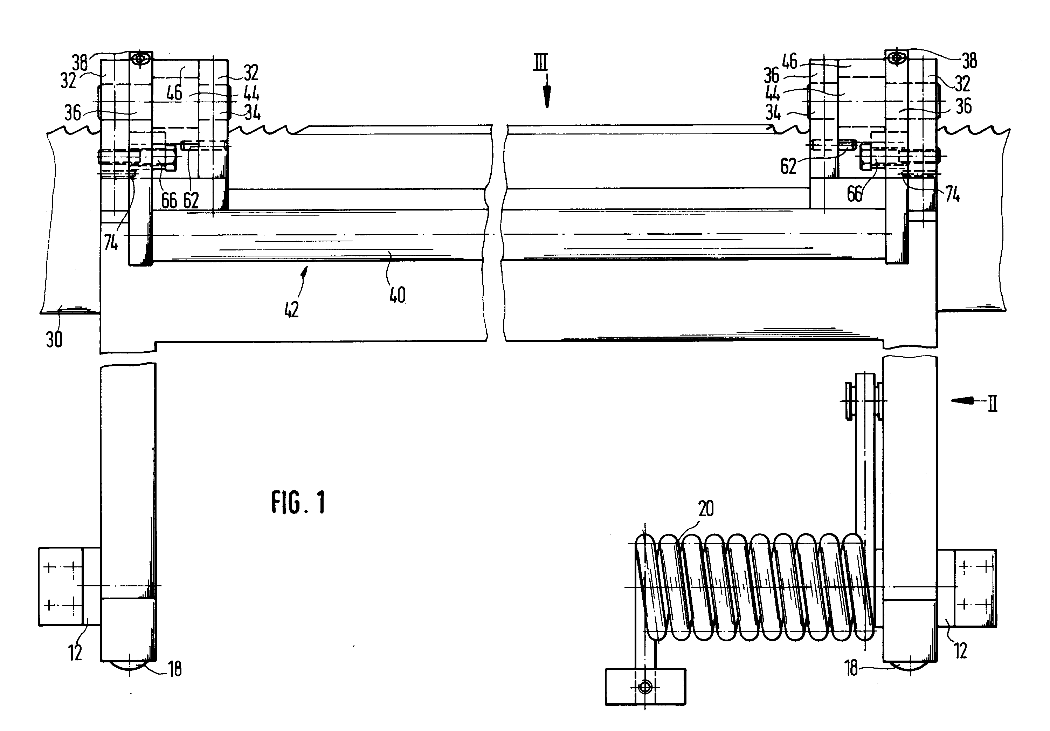

Fig. 1 eine Vorderansicht einer Vorrichtung zum Klemmen eines Sägeblattes,

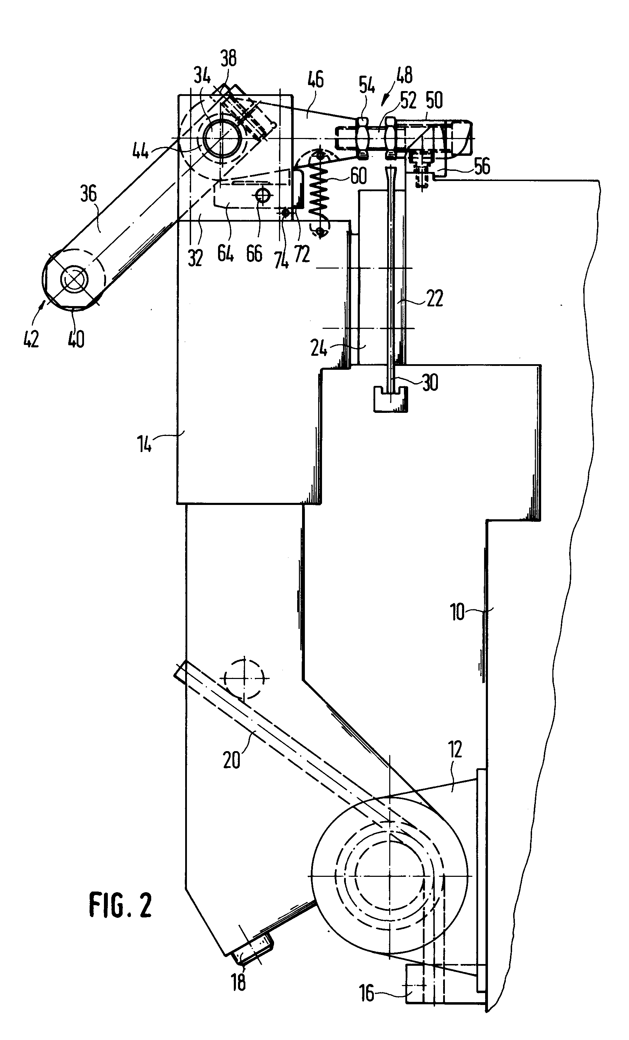

Fig. 2 die Seitenansicht in Richtung des Pfeils II in Fig. 1,

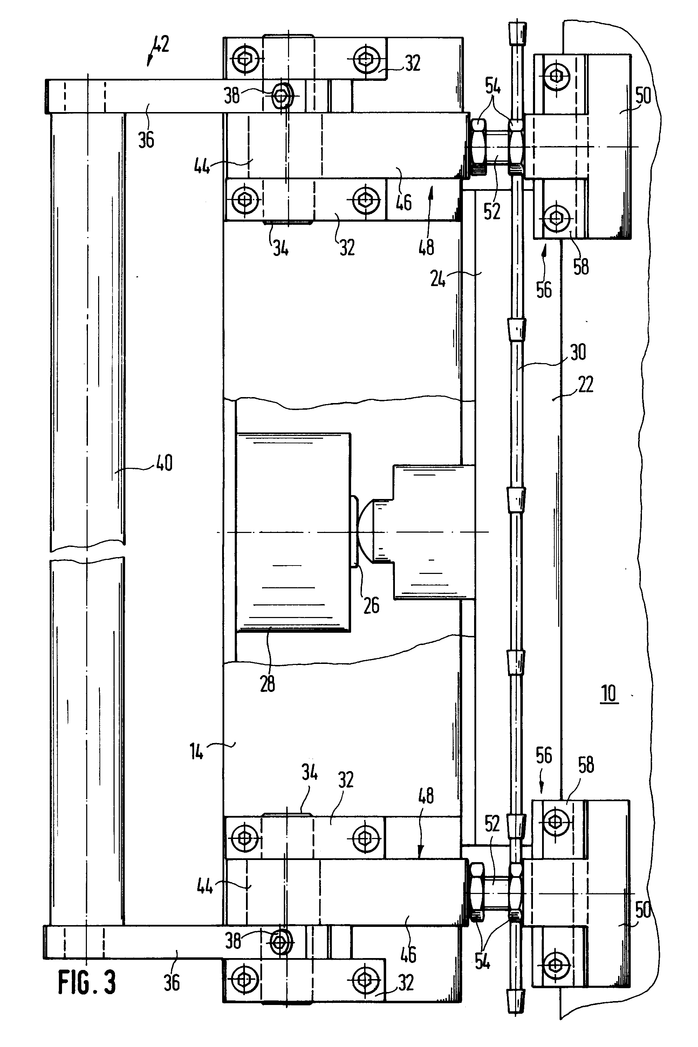

Fig. 3 die zugehörige Draufsicht in Richtung des Pfeils III in Fig. 1,

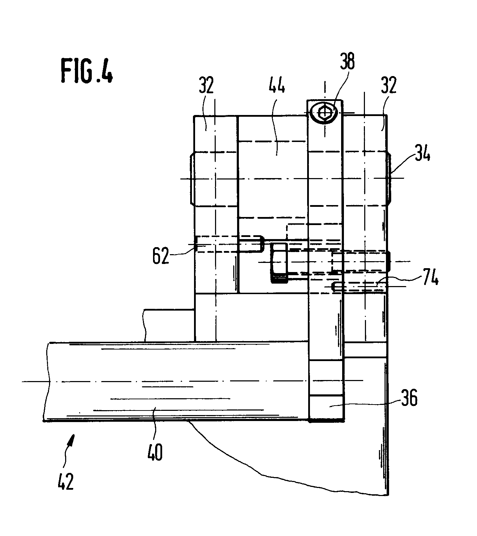

Fig. 4 eine vergrößerte Einzelheit aus Fig. 1,

Fig. 5 eine vergrößerte Einzelheit aus Fig. 2 bei geklemmtem Sägeblatt, und

Fig. 6 die gleiche Einzelheit bei gelöstem Sägeblatt.

In den Zeichnungen sind Teile eines Maschinengestells 10 dargestellt, das zu einer Maschine zum Schärfen von Bandsägen gehört. Am Maschinengestell 10 sind Lagerböcke 12 befestigt, an denen eine Klappe 14 um eine waagerechte Achse A schwenkbar gelagert ist. An den Lagerböcken 12 ist je ein Anschlag 16 ausgebildet, der zusammen mit je einem an der Klappe 14 befestigten Anschlag 18 den Schwenkbereich der Klappe 14 derart begrenzt, daß diese aus der abgebildeten, senkrechten Schließstellung um etwa 60° nach unten in eine Offenstellung schwenkbar ist. Die Klappe 14 ist durch Biegefedern 20 derart an den beiden Lagerböcken 12 abgestützt, daß sie zwischen der Offenstellung und der Schließstellung in jeder beliebigen Zwischenstellung stehenbleibt, wenn keine weitere äußere Kraft auf sie einwirkt.

Am Maschinengestell 10 ist eine erste Klemmbacke 22 befestigt; dieser steht eine zweite Klemmbacke 24 gegenüber, die an der Klappe 14 verschiebbar geführt und an einem Kolben 26 in einem an der Klappe 14 befestigten hydraulischen Zylinder 28 abgestützt ist. Zwischen den beiden Klemmbacken 22 und 24 läßt sich ein Sägeblatt 30 mit einer vom Druck im hydraulischen Zylinder 28 abhängigen Kraft festklemmen, wenn die Klappe 14, wie dargestellt, in ihrer Schließstellung verriegelt ist.

An dem von den Lagerböcken 12 entfernten, in der Schließstellung oberen Rand der Klappe 14 ist zwischen zwei Paar Lagerböcken 32 je ein Lagerbolzen 34 gelagert. Die beiden Lagerbolzen 34 sind um eine gemeinsame Achse drehbar, die zur Schwenkachse A parallel ist. An jedem der beiden Lagerbolzen 34 ist ein Arm 36 mittels einer Schraube 38 festgeklemmt. An den beiden Armen 36 ist eine zur Achse der beiden Lagerbolzen 34 parallele Verbindungsstange 40 befestigt, die zusammen mit diesen Armen eine Handhabe 42 zum Schwenken und Verriegeln der Klappe 14 bildet.

Jeder der beiden Lagerbolzen 34 hat einen zwischen den beiden zugehörigen Lagerböcken 32 ausgebildeten Exzenter 44, dessen Achse sich in einem kleinen Abstand parallel zur Achse der beiden Lagerbolzen 34 erstreckt. Auf den Exzentern 44 ist je ein Basisteil 46 je eines Riegels 48 frei drehbar gelagert. Jeder Riegel 48 hat ein T-förmiges Kopfteil 50, das mit dem zugehörigen Basisteil 46 durch ein Gewindeteil 52 in einem einstellbaren Abstand verbunden ist. Das Gewindeteil 52 jedes Riegels 48 ist mit zwei Muttern 54 gekontert. Jedem Riegel 48 ist ein am Maschinengestell 10 befestigter Stützkörper 56 zugeordnet, der die Form einer oben offenen Gabel hat und an seiner dem Basisteil 46 zugewandten Seite eine Rampe 58 aufweist. Jeder der beiden Riegel 48 ist durch eine Feder 60, im dargestellten Beispiel eine Zugfeder, nach unten zu einem an der Klappe 14 befestigten Anschlag 62 hin vorgespannt.

In der Nähe jedes der beiden Lagerbolzen 34 ist eine zweiarmige Wippe 64 auf einem Lagerbolzen 66 gelagert, dessen Achse sich parallel zu den vorgenannten Achsen erstreckt. In einem Endbereich jeder der beiden Wippen 64 ist eine gehärtete Gleitfläche 68 ausgebildet, der ein nockenartiger Vorsprung 70 am benachbarten Arm 36 der Handhabe 42 zugeordnet ist. Am anderen Endbereich jeder Wippe 64 ist eine Stütze 72 ausgebildet, die imstande ist, den zugehörigen Riegel 48 nach oben zu drücken und oben zu halten. Der Schwenkbereich jeder Wippe 64 ist durch mindestens einen an der Klappe 14 befestigten Anschlag 74 begrenzt.

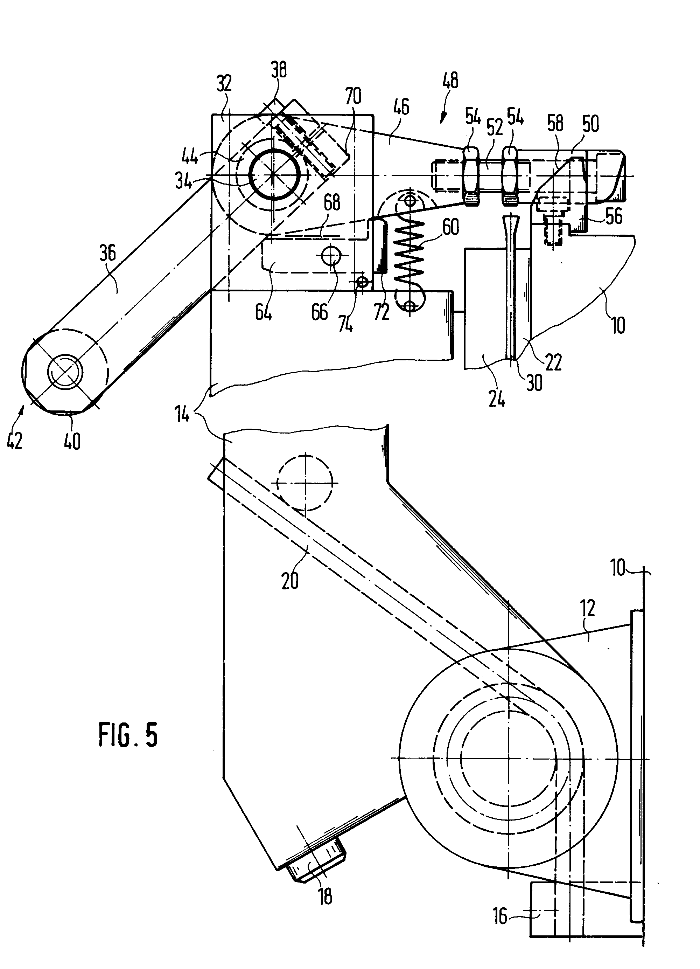

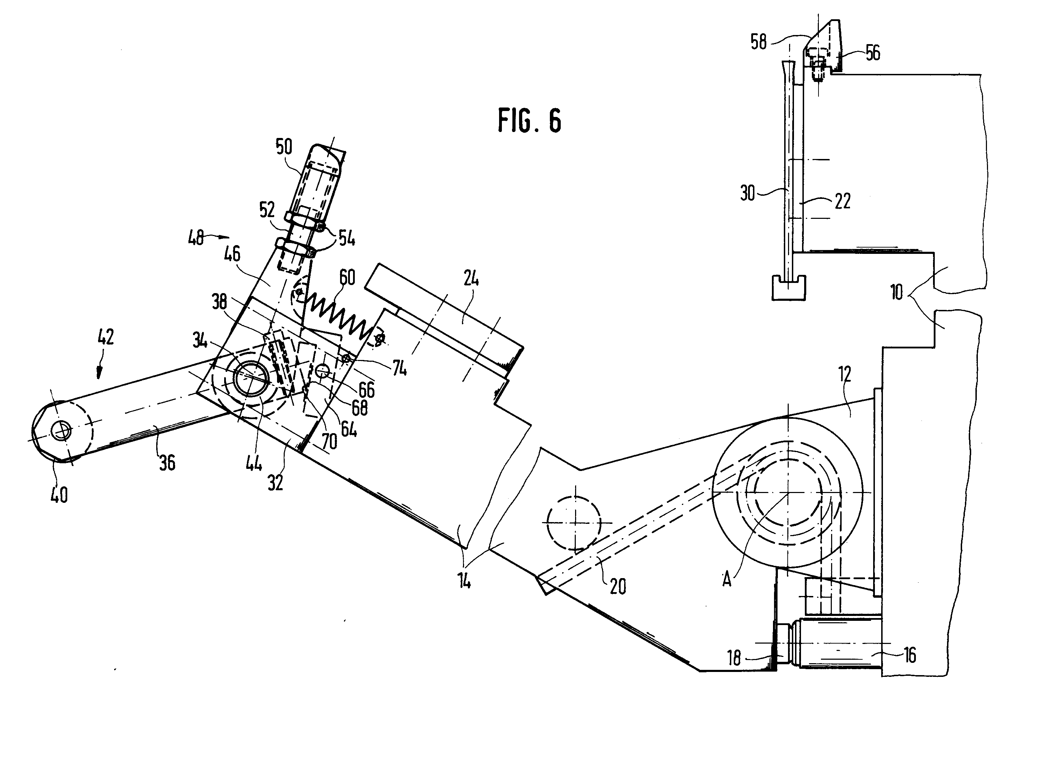

Die Handhabe 42 ist zwischen einer in Fig. 5 besonders deutlich dargestellten, unteren Ruhestellung und einer in Fig. 6 dargestellten, oberen Betätigungsstellung auf- und abschwenkbar. Beim Heraufschwenken der Handhabe 42 aus der Ruhestellung in die Betätigungsstellung gleiten die nockenartigen Vorsprünge 70 der Arme 36 auf den an den Wippen 64 ausgebildeten Gleitflächen 68 und drükken diese nach unten. Infolgedessen bewegen sich die Stützen 72 aufwärts und jede von ihnen drückt den zugehörigen Riegel 48 nach oben.

Wenn die Riegel 48 zuvor, wie in Fig. 5 dargestellt, hinter dem jeweils zugehörigen Stützkörper 56 eingerastet waren, verlassen die Riegel 48 nun diese Einraststellung und gelangen in ihre in Fig. 6 gezeigte Ausraststellung. In der Ausraststellung der beiden Riegel 48 läßt sich die Klappe 14 mittels der Handhabe 42 derart schwenken, daß die Klemmbacke 24 sich von der Klemmbacke 22 entfernt und das Sägeblatt 30 infolgedessen frei bewegt und, wenn es fertig bearbeitet ist, gegen ein anderes Sägeblatt ausgetauscht werden kann. Dabei bleibt es dem Benutzer überlassen, die Klappe 14 mehr oder weniger weit zu öffnen; im allgemeinen wird es nur zum Austauschen des Sägeblattes 30 erforderlich sein, die Klappe 14 vollständig in ihre Offenstellung herunterzuschwenken.

Wenn die Klappe 14 wieder geschlossen werden soll, wird sie mittels der Handhabe 42 nach oben geschwenkt; dabei ist es gleichgültig, ob die Handhabe ihre untere Ruhestellung oder ihre obere Betätigungsstellung einnimmt. Wenn die Handhabe 42 ihre Ruhestellung einnimmt, wird jeder der Riegel 48 von seiner Feder 60 an seinem Anschlag 62 solange anliegend gehalten, bis sein Kopfteil 50 auf die zugehörige Rampe 58 aufgleitet und den Riegel 48 dadurch über den zugehörigen Stützkörper 56 hinweggehoben wird. Wenn aber beim Aufwärtsschwenken der Klappe 14 die Handhabe 42 in ihrer oberen Stellung, der Betätigungsstellung, gehalten wird, dann bewegen sich die Kopfteile 50 der Riegel 48 ohne weiteres über die Stützkörper 56 hinweg und rasten hinter diesen erst dann ein, wenn die Handhabe 42 in ihre Ruhestellung abwärts geschwenkt wird.

In jedem Fall ist es ohne weiteres möglich, alle erforderlichen Bewegungen der Vorrichtung mit einer Hand zu steuern.

**Patentansprüche**

1. Vorrichtung zum Klemmen eines Sägeblattes (30) an einer Sägenbearbeitungsmaschine, mit
   - einer Klappe (14), die an einem Maschinengestell (10) zwischen einer Offenstellung und einer Schließstellung hin- und herbewegbar gelagert ist,
   - einer ersten Klemmbacke (22), die am Maschinengestell (10) abgestützt ist,
   - einer zweiten Klemmbacke (24), die an der Klappe (14) abgestützt ist, um in deren Schließstellung ein Sägeblatt (30) zwischen sich und der ersten Klemmbacke (22) zu klemmen,
   - einem Riegel (48), der zwischen einer Ausraststellung und einer Einraststellung hin- und herbewegbar ist und in seiner Ausraststellung das Öffnen der Klappe (14) ermöglicht, in seiner Einraststellung hingegen die Klappe (14) in deren Schließstellung festhält, und
   - einer Handhabe (42) zum Bewegen des Riegels (48),
   dadurch **gekennzeichnet,** daß
   - der Riegel (48) an der Klappe (14) gelagert und hinter einem am Maschinengestell (10) angeordneten Stützkörper (56) einrastbar ist, und
   - die Handhabe (42), ebenfalls an der Klappe (14), zwischen einer Ruhestellung und einer Betätigungsstellung hin- und herbewegbar gelagert ist und in ihrer Ruhestellung das Einrasten des Riegels (48) zuläßt, bei einer Bewegung der Handhabe (42) in ihre Betätigungsstellung hingegen den Riegel (48) ausrasten läßt.

2. Vorrichtung nach Anspruch 1, dadurch **gekennzeichnet,** daß am Stützkörper (56) eine Rampe (58) ausgebildet ist, die beim Schließen der Klappe (14) mit in Ruhestellung befindlicher Handhabe (42) den Riegel (48) in die Ausraststellung drängt und ihn erst hinter dem Stützkörper (56) einrasten läßt.

3. Vorrichtung nach Anspruch 1 oder 2, dadurch **gekennzeichnet,** daß Riegel (48) und Handhabe (42) mit einem gemeinsamen Lagerbolzen (34) an der Klappe (14) schwenkbar gelagert sind.

4. Vorrichtung nach Anspruch 3, dadurch **gekennzeichnet,** daß sich der Lagerbolzen (34) parallel zu einer Achse (A) erstreckt, um welche die Klappe (14) in bezug auf das Maschinengestell (10) schwenkbar ist.

5. Vorrichtung nach Anspruch 3 oder 4, dadurch **gekennzeichnet,** daß der Riegel (48) auf dem Lagerbolzen (34) gegensinnig zur Handhabe (42) schwenkbar ist und daß an der Klappe (14) zusätzlich eine Wippe (64) gelagert ist, derart, daß durch Schwenken der Handhabe (42) aus ihrer Ruhe- in ihre Betätigungsstellung die Wippe (64) aus einer unwirksamen Stellung in eine Stützstellung schwenkbar ist und dadurch den Riegel (48) ausrasten läßt.

6. Vorrichtung nach einem der Ansprüche 3 bis 5,
dadurch **gekennzeichnet,** daß die Handhabe (42) am Lagerbolzen (34) befestigt ist und dieser einen Exzenter (44) aufweist, auf dem der Riegel (48) gelagert ist.

7. Vorrichtung nach einem der Ansprüche 1 bis 6,
dadurch **gekennzeichnet,** daß der Riegel (48) durch eine Feder (60) im Sinne einer Bewegung in seine Einraststellung belastet ist.

8. Vorrichtung nach einem der Ansprüche 1 bis 7,
dadurch **gekennzeichnet,** daß die Klappe (14) durch eine Feder (20) im Sinne einer Bewegung in ihre Schließstellung vorgespannt und dasdurch von mindestens einem Teil ihres Gewichts entlastet ist.

## Claims

1. Device for clamping a saw blade (30) to a saw working machine comprising
   - a flap (14) which is mounted on a machine frame (10) movable to and fro between an open position and a closure position,
   - a first clamping jaw (22) which is supported on the machine frame (10),
   - a second clamping jaw (24) which is supported on the flap (14) for clamping in the closure position thereof a saw blade (30) between said second clamping jaw (24) and the first clamping jaw (22),
   - a locking member (48) which is movable to and fro between a disengaged position and an engaged position and in its disengaged position permits the opening of the flap (14) but in its engaged position secures the flap (14) in the closure position thereof and,
   - a grip (42) for moving the locking member (48),
   characterized in that
   - the locking member (48) is mounted on the flap (14) and adapted to engage behind a support body (56) disposed on the machine frame (10) and
   - the grip (42) is likewise mounted on the flap (14) and adapted to be moved to and fro between a rest position and an operating position and in its rest position permits engagement of the locking member (48) but on a movement of the grip (42) into its actuating position allows the locking member (48) to disengage.

2. Device according to claim 1, characterized in that on the support body (56) a ramp (58) is formed which on closure of the flap (14) with the grip (42) in the rest position forces the locking member (48) into the disengaged position and allows it to engage only behind the support body (56).

3. Device according to claim 1 or 2, characterized in that said locking member (48) and said grip (42) are pivotally mounted with a common bearing pin (34) on the flap (14).

4. Device according to claim 3, characterized in that the bearing pin (34) extends parallel to an axis (A) about which the flap (14) is pivotable with respect to the machine frame (10).

5. Device according to claim 3 or 4, characterized in that the locking member (48) is pivotal on the bearing pin (34) in the opposite sense to the grip (42) and on the flap (14) a rocket (64) is additionally mounted in such a manner that by pivoting the grip (42) from its rest position to its actuating position the rocker (64) is pivotal out of an inoperative position into a support position and thereby allows the locking member (48) to disengage.

6. Device according to claims 3 to 5, characterized in that the grip (42) is mounted on the bearing pin (34) and the latter comprises an eccentric (44) on which the locking member (48) is mounted.

7. Device according to any one of claims 1 to 6, characterized in that the locking member (48) is loaded by a spring (60) in the sense of a movement into its engaged position.

8. Device according to any one of claims 1 to 7, characterized in that the flap (14) is biased by a spring (20) in the sense of a movement into its closure position and thereby relieved of at least part of its weight.

## Revendications

1. Dispositif de serrage d'une lame de scie (30) dans une machine de dressage de lames de scie, ledit dispositif comprenant
   - un volet (14) qui est disposé sur un banc de machine (10) et peut aller et venir entre une position ouverte et une position fermée,

- une première mâchoire de serrage (22), supportée par le banc de machine (10),
- une seconde mâchoire de serrage (24), supportée par le volet (14), afin de serrer entre elle-même et la première mâchoire (22) une lame de scie (30) quand le volet est fermé,
- un verrou (48) qui peut aller et venir entre une position décliquetée et une position encliquetée et permet l'ouverture du volet (14) quand il occupe sa position décliquetée, mais retient le volet (14) dans sa position fermée quand il occupe sa position encliquetée, et
- une manette (42) pour actionner le verrou (48),

  **caractérisé** en ce que

- le verrou (48) est disposé sur le volet (14) et qu'il est capable de prendre l'encoche derrière un corps de retenue (56) disposé sur le banc de machine (10), et
- la manette (42), elle aussi disposé sur le volet (14), peut aller et venir entre une position de repos et une position active et permet au verrou (48) de prendre l'encoche quand elle est dans sa position de repos, alors qu'elle permet au verrou (48) de se décliqueter quand la manette (42) passe à sa position active.

2. Dispositif selon la revendication 1, **caractérisé** en ce qu'une rampe (58) est formée sur le corps de retenue (56) qui, lors de la fermeture du volet (14) avec la manette (42) en position de repos, force le verrou (48) à prendre sa position de repos et ne lui permet de prendre l'encoche que derrière le corps de retenue (56).

3. Dispositif selon la revendication 1 ou 2, **caractérisé** en ce que le verrou (48) et la manette (42) sont logés à pivotement sur le volet (14) par l'intermédiaire d'un axe commun (34).

4. Dispositif selon la revendication 3, **caractérisé** en ce que l'axe (34) s'étend en direction parallèle à un axe (A) autour duquel le volet (14) est capable de pivoter par rapport au banc de machine (10).

5. Dispositif selon la revendication 3 ou 4, **caractérisé** en ce que le verrou (48) est capable de pivoter autour de l'axe (34) en sens opposé à la manette (42), et en ce que, en plus, une balance (64) est disposée sur le volet (14), de manière que, par le pivotement de la manette (42) de sa position de repos à sa position active, la balance (64) est capable de pivoter de sa position inactive à une position de soutien et, par ce moyen, cause le verrou (48) à se décliqueter.

6. Dispositif selon l'une quelconque des revendications 3 à 5, **caractérisé** en ce que la manette (42) est attachée à l'axe (34), et que ce dernier est muni d'un excentrique (44) sur lequel est disposé le verrou (48).

7. Dispositif selon l'une quelconque des revendications 1 à 6, **caractérisé** en ce que le verrou (48) est chargé par un ressort (60) dans le sens d'un mouvement vers sa position encliquetée.

8. Dispositif selon l'une quelconque des revendications 1 à 7, **caractérisé** en ce que le volet (14) est chargé par un ressort (20) dans le sens d'un mouvement vers sa position fermée et est déchargé, par ce moyen, d'une partie de son poids, au moins.

FIG. 1

FIG. 2

FIG. 3

FIG.4

FIG. 5

FIG. 6

12